# EUROPÄISCHE PATENTSCHRIFT

(11) **EP 1 316 630 B1**
(45) Veröffentlichungstag und Bekanntmachung des Hinweises auf die Patenterteilung: **29.09.2004**
(21) Anmeldenummer: 02005752.7
(22) Anmeldetag: 13.03.2002
(51) Int. Cl.: D01H 13/32, D01H 5/38, D01G 23/06

(54) **Vorrichtung und Verfahren zur Erfassung der Masse und des Feuchtegehaltes des Fasermaterials in einer Spinnereivorbereitungsmaschine**
Device and process for measuring the mass and the humidity of fibrous material in a spinning preparation machine
Dispositif et procédé pour mesurer la masse et l'humidité d'une matière fibreuse dans une machine de préparation de filature

(30) Priorität: 28.11.2001 DE 20119344 U
(43) Veröffentlichungstag der Anmeldung: 04.06.2003
(73) Patentinhaber: TEWS ELEKTRONIK Dipl.-Ing. Manfred Tews, 22459 Hamburg (DE)
(72) Erfinder: Hermann, Rainer, 20253 Hamburg (DE); Tews, Manfred, 22459 Hamburg (DE); Schlemm, Udo, 20259 Hamburg (DE)
(74) Vertreter: Glawe, Delfs, Moll

(56) Entgegenhaltungen:
- EP-A- 0 669 522
- WO-A-00/28615
- DE-A- 3 927 394
- US-A- 4 481 820
- US-A- 4 819 301
- US-A- 4 962 569
- US-A- 4 974 296
- US-A- 5 864 239
- US-A1- 2001 030 543

## Beschreibung

Die Erfindung betrifft eine Vorrichtung und ein Verfahren zur Messung der Masse und/oder des Feuchtegehaltes eines eine Spinnereivorbereitungsmaschine durchlaufenden Materials. Die Erfindung betrifft auch eine Spinnereivorbereitungsmaschine, die mit einer solchen Vorrichtung ausgerüstet ist. Wenn hier von Masse" die Rede ist, so ist damit immer die Masse pro Längeneinheit gemeint.

Im Spinnereivorbereitungsprozeß wird zunächst das ballenförmig angelieferte Rohmaterial vom Ballen abgearbeitet und nach Reinigung und Mischung einer sog. Karde zugeführt. Dort wird das Material zu Fasersträngen verarbeitet und anschließend in einem faßähnlichen Behälter, einer sog. Kanne, abgelegt. Mehrere solcher Faserstränge werden dann zusammengeführt und einem Streckwerk zugeführt. Hier werden sie mit Hilfe von Walzenpaaren gestreckt, um so die Fasern parallel auszurichten und einen entsprechend dünneren Strang zu erhalten, der wiederum in einer Kanne abgelegt wird, um dann später oder an anderer Stelle weiterverarbeitet zu werden.

Wesentlicher Parameter bei Durchlaufen des Streckwerks ist das Streckverhältnis. Dieses kann dadurch verändert werden, dass die Geschwindigkeiten aufeinanderfolgender Walzenpaare verändert werden. Je schneller ein nachfolgendes Walzenpaar in Bezug auf ein vorhergehendes rotiert, um so mehr wird das Material gestreckt. Haben die Faserbänder eingangs eine größere Masse, so wird man das Streckverhältnis erhöhen, um einen Ausgangsstrang immer gleicher Masse zu erhalten. Umgekehrt wird verfahren, wenn die eintretenden Faserstränge eine geringere Masse haben. Es ist daher wesentlich, diese Masse auf jeden Fall vor dem Eingang in das Streckwerk zu messen. Zusätzliche Kontrollmessungen können auch in demselben oder hinter demselben erfolgen.

Die Kontrolle der Homogenität der Faserbandmasse ist auch am Ausgang der Karde nötig. Die Steuerung der Karden hinsichtlich einer größeren Bandhomogenität kann mit Hilfe einer prozeßbegleitenden Messvorrichtung der Bandmasse erfolgen.

Es ist bekannt, die Messung der Faserbandmasse mit mechanischen Meßeinrichtungen vorzunehmen, z. B. mit Walzenpaaren, die den Materialstrang zwischen sich einschließen und um so mehr voneinander weggedrückt werden, je dicker dieser Strang ist. Ein Problem ist dabei aber die beträchtliche Geschwindigkeit, mit der diese Maschinen arbeiten. Hier sind Geschwindigkeiten der Materialstränge bis zu 1000 m/min typisch, was Geschwindigkeiten von ungefähr bis 17 m/sec bedeutet. Sollen Massenänderungen erfaßt werden, die sich über nur wenige Zentimeter des Strangs erstrecken, muss deshalb die Messeinrichtung eine zeitliche Auflösung einer Größenordnung von 1 msec oder weniger haben. Dies ist mit den erwähnten mechanischen Einrichtungen zwar in einigermaßen zufriedenstellender Weise zu erreichen.

Der Nachteil besteht aber darin, daß durch die mechanischen Reibungskräfte und das Zusammenpressen des Materials ungünstig auf die Materialeigenschaft Einfluß ausgeübt wird. Die thermische Belastung führt zur lokalen Erhitzung oder Überhitzungen, was das Material dauernd schädigen kann. Die mechanische Belastung führt zu im Strangquerschnitt ungleichmäßigen Verzerrungen. Die Struktur, z. B. der Kräuselungsgrad beeinflußt das Meßergebnis (Struktureinfluß).

*Diese Nachteile werden wenigstens teilweise vermieden, wenn die Masse mit speziellen kapazitiven Verfahren gemessen wird (US 4,819,301 A). Da es im gesamten Spinnereivorbereitungsprozeß vorteilhaft ist, den Feuchtegehalt des Materials zu kennen, besonders bei der Ballenabarbeitung, soll durch ein kapazitives Verfahren durch Messung bei zwei verschiedenen Frequenzen auch die Feuchte bestimmt werden (US 4,974,296 A), was aber nur in begrenztem Umfang möglich ist.*

Die Aufgabe der Erfindung besteht in der Schaffung einer Vorrichtung und eines Verfahrens, mit denen die Bandmasse und/*oder* die Materialfeuchte mit größerer Zeitauflösung zuverlässig gemessen werden kann.

*Eine erfindungsgemäße Lösung besteht darin, daß die Vorrichtung einen Mikrowellenresonator und eine Meßelektronik mit Einrichtungen zum Erzeugen von Mikrowellen und zum Detektieren und Auswerten von Änderungen der Resonanzeigenschaften des Mikrowellenresonators aufweist. Eine weitere erfindungsgemäße Lösung besteht in einem Verfahren, bei dem die Messung mit Hilfe von Mikrowellen durchgeführt wird und Änderungen der Resonanzeigenschaften eines Mikrowellenresonators detektiert und ausgewertet werden.*

Es ist bekannt, mit Mikrowellenresonatoren die Masse und/oder Feuchte eines Materials zu messen (EP 0 468 023 B1). Es ist *nun* auch möglich, nicht nur bei massiven Materialien solche Messungen vorzunehmen, sondern auch bei schnell laufenden Materialsträngen. Zu diesem Zweck wird der laufende Materialstrang durch den Mikrowellenresonator hindurchgeführt. Insbesondere durch Messung der Verbreiterung der Resonanzkurve und Änderung der Resonanzfrequenz des Mikrowellenresonators aufgrund des hindurchlaufenden Materials kann die Masse pro Längeneinheit des Materialstrangs und gleichzeitig sein Feuchtegehalt bestimmt werden.

*Es ist bekannt, durch Beobachtung der Verschiebung der Resonanzfrequenz und der Verbreiterung der Resonanzfrequenz ein Pulver zu vermessen, das an einem Mikrowellenresonator vorbeiläuft oder durch denselben hindurchläuft. Dabei handeltes sich aber um Rohmaterial zur Versorgung von Pulverbeschichtungsgeräten, das eine genau definierte Eigenschaft,* *insbesondere genau bekannte Feuchtigkeit hat, so daß die Feuchtigkeit nicht gemessen werden muß und auch nicht gemessen wird (EP 0 669 522 A2). Es ist auch zu erwarten, daß ein Pulver für eine Pulverbeschichtungsmaschine genau definierte und homogene Eigenschaften hat, was insbesondere bei natürlichen Rohmaterialien für Spinnereivorbereitungsmaschinen nicht der Fall ist.*

Die Dichtemessung kann einerseits zur Steuerung der Homogenisierung der Faserbandmassen in Karden und Streckwerken verwendet werden. Sie kann aber auch dazu dienen, außergewöhnliche Betriebszustände zu melden und ein Alarmsignal einzuschalten bzw. die Maschine abzustellen. Die Feuchtemessung im Bereich der Ballenabarbeitung und auch der späteren Verarbeitungsschritte kann zur Entscheidung über die Notwendigkeit einer Trocknung des Materials herangezogen werden. Auch andere Prozeßparameter, wie z. B. Streckparameter sind abhängig von der Materialfeuchte.

Die erfindungsgemäße Vorrichtung (s. Anspruch 1) hat sich für beide Messaufgaben als sehr vorteilhaft erwiesen. Sie kann für eine große Zahl von faserförmigen Materialien verwendet werden, die in Spinnereivorbereitungsmaschinen verarbeitet werden, wie z.B. Wolle, Baumwolle und Kunststofffasern.

Zweckmäßigerweise weist der Mikrowellenresonator eine Durchgangsöffnung auf, die den Materialstrang umschließt. So ist immer sichergestellt, dass sich der gesamte Materialstrang im Messbereich des Mikrowellenresonators befindet. Bei dieser Art von Mikrowellenresonator muss der Materialstrang in die Durchgangsöffnung eingefädelt werden und darf aus diesem Grunde nicht endlos sein.

An einem endlosen Materialstrang kann gemessen werden, wenn der Mikrowellenresonator mindestens eine schlitzförmige Öffnung aufweist, in die der Materialstrang von der Seite her eingeführt wird. Ist diese schlitzförmige Öffnung tief genug, so können auch mehrere Materialstränge gleichzeitig den Mikrowellenresonator durchlaufen.

Hierbei ist es besonders zweckmässig, wenn der Mikrowellenresonator zwei halbzylinderförmige beabstandete Hohlräume aufweist, zwischen denen die mindestens eine schlitzförmige Öffnung angeordnet ist.

Für Material im Bereich der Ballenabarbeitung, das noch nicht bandförmig vorliegt, ist es zweckmässig, den Resonator als planaren Streufeldsensor auszuführen.

Zweckmässigerweise ist der Resonator so ausgebildet, dass er bei Mikrowellenfrequenzen von ca. 300 MHz bis ca. 30 GHz, insbesondere von ca. 1 bis ca. 10 GHz arbeitet.

Die verwendete Frequenz steht dabei im engen Zusammenhang mit den Abmessungen. Es ist durchaus möglich, die Konstruktion so zu treffen, dass der aktive Messraum eine Länge in der Grössenordnung von 1 cm hat. Dies bedeutet bei den vorerwähnten Geschwindigkeiten von 6 bis 14 m/sec eine zeitliche Auflösung in der Grössenordnung 1 msec, was durch elektronische Mittel auswertbare Ergebnisse gibt. Man erhält so eine räumliche Auflösung von der Grössenordnung von 1 cm.

Andere Formen von Hohlraumresonatoren sind ebenfalls möglich, solange sichergestellt ist, dass das Messvolumen einigermassen homogen aufgebaut ist, d. h. keine grossen Schwankungen der Signale ergibt, wenn sich der Materialstrang innerhalb des Messvolumens bewegt.

Eine erfindungsgemässe Spinnereivorbereitungsmaschine zur Ballenabarbeitung und/oder zur Kardierung des Materials und/oder zur Streckung des Materials zeichnet sich dadurch aus, dass sie mindestens einen Mikrowellenresonator zur Messung der Masse und/oder der Feuchte des die Maschine durchlaufenden Materials aufweist.

Bevorzugt kann ein Mikrowellenresonator zur Ermittlung der Feuchte des in Ballen vorliegenden Rohmaterials verwendet werden, der jeweils auf die frisch abgekämmte Oberfläche des Ballens des Urspungsmaterials aufgebracht wird. Statt dessen könnte der Feuchtesensor auch hinter dem Ballen an dem Materialförderer vorgesehen sein, der das abgearbeitete Material zur Karde fördert.

Vorteilhafterweise ist ein Mikrowellenresonator im Anschluss an die Einrichtung zur Kardierung vorgesehen. Dadurch kann festgestellt werden, welche Homogenität bzgl. der Masse die Materialstränge haben, und eine Regelung der Karde somit vorgenommen werden.

Vorteilhafterweise ist ein Resonator für Faserbänder vorgesehen, die in ein Streckwerk eintreten, so dass das Streckverhältnis entsprechend eingestellt werden kann, um am Ausgang einen Materialstrang mit gewünschter Streckung und gewünschter Dichte/Dicke zu erhalten. Wenn ein Mikrowellenresonator in dem Streckwerk vorgesehen ist, so kann die Messung näher an der Stelle vorgenommen werden, wo die Streckung tatsächlich stattfindet. Ist auch ein Mikrowellenresonator am Ausgang des Streckwerks vorgesehen, so kann hier die Wirkung der Streckung überprüft werden.

Vorteilhaft ist eine gleichzeitige Messung der Bandgeschwindigkeit, da somit eine Ermittlung des Masseflusses, d. h. des Produktes aus Masse und Geschwindigkeit, auch bei variabler Bandgeschwindigkeit möglich ist.

Wie die Messungen im einzelnen vorgenommen werden, ist eine Zweckmässigkeitsfrage und hängt auch davon ab, wie die Spinnereivorbereitungsmaschine konstruiert ist. So könnten z.B. die einzelnen Faserbänder, die zusammengeführt werden, einzeln oder aber zusammen gemessen werden. Auch die Orte, an denen die Dichtemessung vorgenommen wird, können unterschiedlich sein, wie dies oben erwähnt wurde.

Die Erfindung wird im folgenden anhand einer vorteilhaften Ausführungsform unter Bezugnahme auf die beigefügten Zeichnungen beschrieben. Es zeigen in schematischer Ansicht:
- Fig. 1: den prinzipiellen Aufbau eines ersten Teils einer Spinnereivorbereitungsanlage mit den erfindungsgemässen Vorrichtungen;
- Fig. 2: den prinzipiellen Aufbau eines zweiten Teils einer Spinnereivorbereitungsanlage mit den erfindungsgemässen Vorrichtungen; und
- Fig. 3: die Seitenansicht eines Hohlraumresonators, der erfindungsgemäss ausgebildet ist.

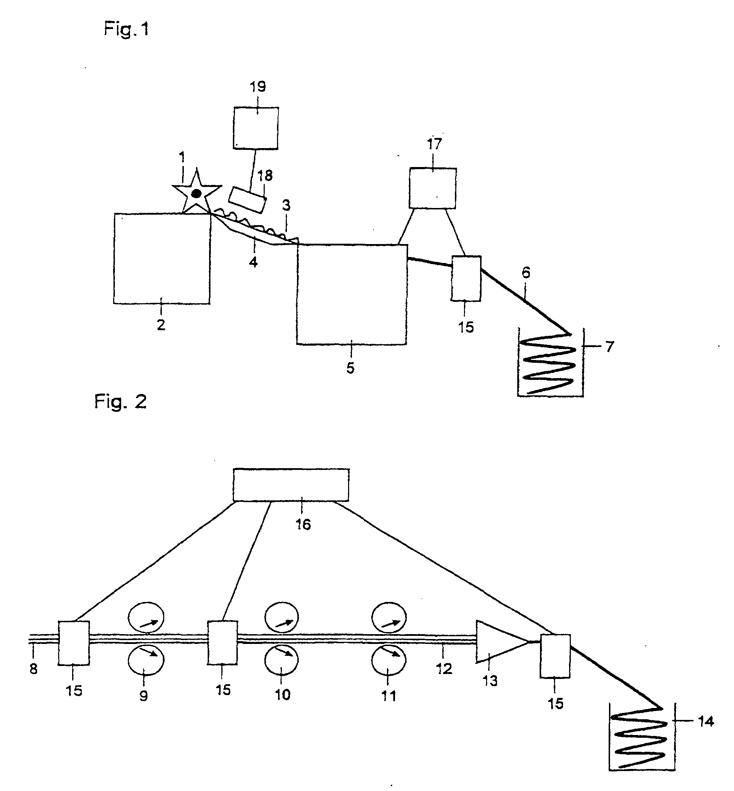

Wie dies in Fig. 1 gezeigt ist, wird mit Hilfe einer Abarbeitungseinrichtung 1 das faserförmige Material von einem Ballen 2 abgearbeitet und verlässt als Material 3 den Ballen 2 auf einem Förderer 4. Nach in diesem Zusammenhang nicht wesentlicher Mischung und Reinigung (nicht gezeigt) wird in einer Karde 5 das Material zu einem Faserband 6 verarbeitet, das in einer Kanne 7 zwischengelagert wird.

Wie dies in Fig. 2 gezeigt ist, werden mehrere Faserbänder 8 aus mehreren Kannen 7 dem Streckwerk zugeführt und durchlaufen Walzenpaare 9, 10, 11 (es können selbstverständlich auch noch mehr Walzenpaare vorgesehen sein). Die Rotationsgeschwindigkeit der Walzenpaare nimmt dabei in der Bewegungsrichtung des Materialstrangs, in Fig. 2 also von links nach rechts, zu, wodurch die Faserbänder 8 zu dünneren Materialsträngen 12 durch Strecken verarbeitet werden und die Fasern parallelisiert werden. Die Faserbänder 12 werden im Bandtrichter 13 zu einem Band zusammengefasst und in einer Kanne 14 abgelegt, um später weiterverarbeitet zu werden.

Die Massen des aus der Karde auslaufenden Faserbandes 6, der ins Streckwerk einlaufenden Faserbänder 8, der Bänder im Streckwerk bzw. des aus dem Streckwerk auslaufenden Strangs können mit Hilfe von Mikrowellenresonatoren 15 gemessen werden. Die Mikrowellenresonatoren am Streckwerk sind dabei mit einer angepassten Messelektronik 16 verbunden, durch die die Mikrowellen erzeugt werden, die Änderungen der Resonanzeigenschaften der Mikrowellenresonatoren 15 detektiert und dann ausgewertet werden. Zweckmässigerweise ist mindestens der in Fig. 2 linke Mikrowellenresonator 15 vor der Streckeinrichtung 9, 10, 11 vorgesehen. Die weiteren Mikrowellenresonatoren 15 dienen zur besseren Kontrolle des Streckvorgangs. Durch die Elektronikeinheit 16 wird, je nach Messung durch die Mikrowellenresonatoren 15 auch das Streckverhältnis, d.h. werden die Geschwindigkeitsverhältnisse der Walzenpaare 9, 10, 11 gesteuert.

Entspechend wird durch den Resonator 15 am Ausgang der Karde 5 und die zugehörige Steuerungselektonik 17 die Funktion der Karde 5 geregelt.

In Fig. 1 ist noch ein weiterer Mikrowellenresonator 18 mit Auswerteeinrichtung 19 gezeigt. Dieser dient dazu, die Feuchte des vom Ballen 2 abgearbeiteten Materials 3 vor Eintritt in die Karde 5 zu messen.

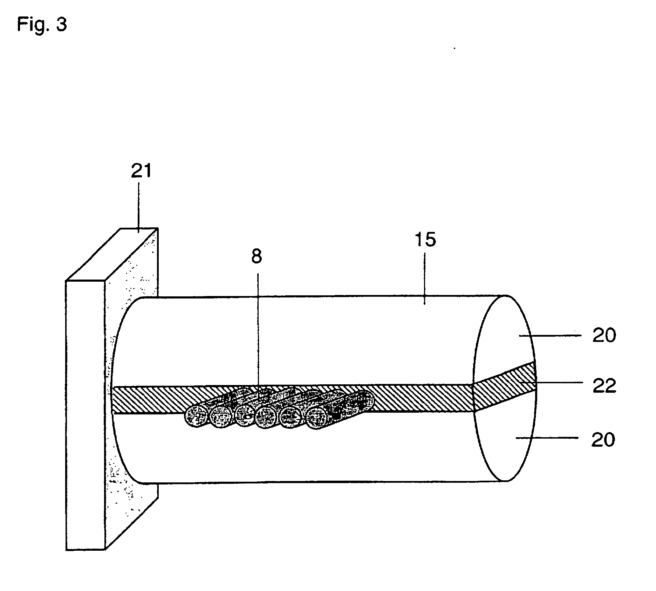

In Fig. 3 ist ein Mikrowellenresonator 15 gezeigt, der zwei halbzylinderförmige Hohlräume 20 aufweist, die durch eine Halterung 21 in einem Abstand gehalten werden, so dass sie zwischen sich einen Schlitz 22 einschliessen, in den die Faserbänder 8 eingeführt sind.

Testmessungen an Faserbändern im Spinnereivorbereitungsprozeß zeigten, daß die Messung mit Mikrowellen-Resonatoren die folgenden Eigenschaften aufweist:

Eine gleichzeitige, ortsaufgelöste Messung von Masse und Feuchte des Meßgutes ist auch bei hohen Bandgeschwindigkeiten sehr gut möglich. Die Messung ist im relevanten Geschwindigkeitsbereich unabhängig von der Bandgeschwindigkeit. Da die Massekalibration mit Mikrowellenresonatoren immer linear ist und bei leerem Resonator der Mikrowellenmassemeßwert gleich Null ist, ist eine Kalibration der Massemessung an Material konstanter Feuchte durch Aufnahme eines einzigen Kalibrationspunktes möglich. Für die Kalibration der Messung von Masse und Feuchte sind zwei Kalibrationspunkte nötig. Nach der Kalibration ist eine feuchtekompensierte Messung der Bandmasse gewährleistet. Die Messung ist weitgehend unabhängig von der Struktur des Materials, z. B. seiner Kräuselung. Messungen an Baumwolle und Kunstfasern zeigten, daß sich eine wechselnde Zusammensetzung des Meßgutes nur schwach in den gemessenen Werten niederschlägt, d. h. der Meßfehler bei Verwendung eines kalibrationsfremden Materials bleibt gering.

## Patentansprüche

1. Vorrichtung zur Messung der Masse und/oder der Feuchte eines eine Spinnereivorbereitungsmaschine durchlaufenden Materials, **dadurch gekennzeichnet, dass** sie einen Mikrowellenresonator (15, 18) und eine Meßelektronik mit Einrichtungen zum Erzeugen von Mikrowellen und zum Detektieren und Auswerten von Änderungen der Resonanzeigenschaften des Mikrowellenresonators (15, 18 ) aufweist, und **dass** nach einer Kalibration eine Feuchtekompensierte Messung der Masse des durchlaufenden Materials durchführbar ist.

2. Vorrichtung nach Anspruch 1, **dadurch gekennzeichnet, daß** sie eine Vorrichtung zur Messung der Geschwindigkeit des durchlaufenden Materialstrangs aufweist.

3. Vorrichtung nach Anspruch 1 oder 2, **dadurch gekennzeichnet, dass** der Mikrowellenresonator (15) eine Durchgangsöffnung aufweist, die den Materialstrang umschliesst.

4. Vorrichtung nach Anspruch 1 oder 2, **dadurch gekennzeichnet, dass** der Mikrowellenresonator (15) mindestens eine schlitzförmige Öffnung (22) aufweist, in die der Materialstrang (8) von der Seite her einführbar ist.

5. Vorrichtung nach Anspruch 4, **dadurch gekennzeichnet, dass** der Mikrowellenresonator (15) zwei halbzylinderförmige beabstandete Hohlräume (20) aufweist, zwischen denen mindestens eine schlitzförmige Öffnung (22) angeordnet ist.

6. Vorrichtung nach einem der Ansprüche 1 bis 5, **dadurch gekennzeichnet, dass** sie einen planaren Mikrowellenresonator (18) aufweist.

7. Vorrichtung nach einem der Ansprüche 1 bis 6, **dadurch gekennzeichnet, dass** der Resonator (15,18) bei Mikrowellenfrequenzen von ca. 300 MHz bis ca. 30 GHz, insbesondere von ca. 1 bis ca. 10 GHz betreibbar ist.

8. Verfahren zur eines Messung der Masse und/oder der Feuchte eine Spinnereivorbereitungsmaschine durchlaufenden Materials, **dadurch gekennzeichnet, daß** die Messung mit Hilfe von Mikrowellen durchgeführt wird dass Anderungen der Resonanzeigenschaften eines Mikrowellenresonators detektiert und ausgewortet werden, und **dass** die Messung der Masse des durchlenfenden Materials nach einer Kalibration Feuchtekompensiert wird.

9. Verfahren nach Anspruch 8, **dadurch gekennzeichnet, daß** die Geschwindigkeit des durchlaufenden Materialstrangs gemessen wird.

10. Verfahren nach Anspruch 8 oder 9, **dadurch gekennzeichnet, daß** die Messung bei Mikrowellenfrequenzen von ca. 300 MHz bis ca. 30 GHz, insbesondere von ca. 1 GHz bis ca. 10 GHz durchgeführt wird.

11. Spinnereivorbereitungsmaschine zur Ballenabarbeitung und/oder zur Kardierung des Materials und/oder zur Streckung des Materials, **dadurch gekennzeichnet, dass** sie mindestens eine Vorrichtung nach einem der vorrigen Ansprüchen aufweist, mit einen Mikrowellenresonator (15,18) zur Messung der Masse und/oder der Feuchte von dem die Maschine durchlaufenden Materials (6, 8, 12).

12. Spinnereivorbereitungsmaschine nach Anspruch 11, **dadurch gekennzeichnet, dass** ein Mikrowellenresonator (15) im Anschluss an die Einrichtung zur Kardierung vorgesehen ist.

13. Spinnereivorbereitungsmaschine nach Anspruch 11 oder 12, **dadurch gekennzeichnet, dass** ein Mikrowellenresonator (15) in der Streckeinrichtung (9, 10, 11) vorgesehen ist.

14. Spinnereivorbereitungsmaschine nach einem der Ansprüche 11 bis 13, **dadurch gekennzeichnet, dass** ein Mikrowellenresonator (15) hinter dem Streckwerk (9, 10, 11) vorgesehen ist.

15. Spinnereivorbereitungsmaschine nach einem der Ansprüche 11 bis 14, **dadurch gekennzeichnet, dass** sie mindestens einen Mikrowellensensor (18) zur Feuchtemessung des Ausgangsmaterials (2) aufweist.

## Claims

1. Device for determining the mass and/or the moisture content of a material passing through a spinning preparation machine, **characterised in that** it has a microwave resonator (15, 18) and measurement electronics with devices for generating microwaves and for detecting and evaluating changes in the resonance characteristics of the microwave resonator (15, 18) and **in that**, following a calibration, a moisture-compensated determination of the mass of the material passing through can be carried out.

2. Device according to Claim 1, **characterised in that** it has a device for determining the velocity of the strand of material passing through.

3. Device according to Claim 1 or 2, **characterised in that** the microwave resonator (15) has a passageway that encloses the strand of material.

4. Device according to Claim 1 or 2, **characterised in that** the microwave resonator (15) has at least one slit-shaped opening (22) into which the strand (8) of material can be introduced from the side.

5. Device according to Claim 4, **characterised in that** the microwave resonator (15) has two semicylindrical cavities (20) some distance apart, between which at least one slit-shaped opening (22) is arranged.

6. Device according to one of Claims 1 to 5, **characterised in that** it has a planar microwave resonator (18).

7. Device according to one of Claims 1 to 6, **characterised in that** the resonator (15, 18) can be operated at microwave frequencies of approximately 300 MHz to approximately 30 GHz, in particular from approximately 1 to approximately 10 GHz.

8. Method for determining the mass and/or the moisture content of a material passing through a spinning preparation machine, **characterised in that** the determination is carried out with the aid of microwaves, **in that** changes in the resonance characteristics of a microwave resonator are detected and evaluated and **in that** the determination of the mass of the material passing through is compensated for moisture following a calibration.

9. Method according to Claim 8, **characterised in that** the velocity of the strand of material passing through is determined.

10. Method according to Claim 8 or 9, **characterised in that** the determination is carried out at microwave frequencies of approximately 300 MHz to approximately 30 GHz, in particular from approximately 1 to approximately 10 GHz.

11. Spinning preparation machine for bale processing and/or carding the material and/or for stretching the material, **characterised in that** it has at least one device according to one of the preceding claims, with a microwave resonator (15, 18) for determination of the mass and/or the moisture content of the material (6, 8, 12) passing through the machine.

12. Spinning preparation machine according to Claim 11, **characterised in that** a microwave resonator (15) is provided connected to the device for carding.

13. Spinning preparation machine according to Claim 11 or 12, **characterised in that** a microwave resonator (15) is provided in the stretching device (9, 10, 11).

14. Spinning preparation machine according to one of Claims 11 to 13, **characterised in that** a microwave resonator (15) is provided downstream of the stretcher (9, 10, 11).

15. Spinning preparation machine according to one of Claims 11 to 14, **characterised in that** it has at least one microwave sensor (18) for determining the moisture content of the starting material (2).

## Revendications

1. Dispositif de mesure de la masse et/ou de l'humidité d'une matière parcourrant une machine de préparation de filature, **caractérisé en ce qu'**il présente un résonateur de micro-ondes (15, 18) et une électronique de mesure pourvue de dispositifs pour générer des micro-ondes et pour détecter et évaluer les changements de caractéristiques de résonance du résonateur de micro-ondes (15, 18) et **en ce qu'**après un calibrage, une mesure de la masse de la matière circulant peut être effectuée.

2. Dispositif selon la revendication 1, **caractérisé en ce qu'**il comporte un dispositif de mesure de la vitesse du paquet de matière en circulation.

3. Dispositif selon la revendication 1 ou 2, **caractérisé en ce que** le résonateur de micro-ondes (15) présente une ouverture traversante qui entoure le paquet de matière.

4. Dispositif selon la revendication 1 ou 2, **caractérisé en ce que** le résonateur de micro-ondes (15) présente qu moins une ouverture (22) en forme de fente dans laquelle le paquet de matière (8) est introduit par le côté.

5. Dispositif selon la revendication 4, **caractérisé en ce que** le résonateur de micro-ondes (15) présente deux espaces creux semi-cylindriques espacés entre lesquels est disposée au moins une ouverture (22) en forme de fente.

6. Dispositif selon l'une des revendications 1 à 5, **caractérisé en ce qu'**il présente un résonateur de micro-ondes (18) plan.

7. Dispositif selon l'une des revendications 1 à 5, **caractérisé en ce que** le résonateur de micro-ondes (15, 18) peut être mis en service pour des fréquences de micro-ondes d'environ 300 MHz jusqu'à environ 30 GHz, en particulier d'environ 1 à 10 GHz.

8. Procédé de mesure de la masse et/ou de l'humidité d'une matière parcourrant une machine de préparation de filature, **caractérisé en ce que** la mesure est effectuée au moyen de micro-ondes, que des changements de caractéristiques de résonance du résonateur de micro-ondes sont détectées et évaluées et **en ce que** la mesure de la masse de la matière circulant est compensée après un calibrage.

9. Procédé selon les revendications 8 et 9, **caractérisé en ce que** la vitesse de la matière circulant est mesurée.

10. Procédé selon les revendications 8 et 9, **caractérisé en ce que** la mesure est effectuée avec des fréquences de micro-ondes d'environ 300 MHz jusqu'à environ 30 GHz, en particulier d'environ 1 à 10 GHz.

11. Machine de préparation de filature pour la confection de balles et/ou pour carder la matière et/ou pour étirer la matière, **caractérisée en ce qu'**elle présente au moins un dispositif selon l'une des revendications précédentes, avec un résonateur de micro-ondes (15,18) pour mesurer la masse et/ou l'humidité de la matière (6,8, 12) qui circule dans la machine.

12. Machine de préparation de filature selon la revendication 11, **caractérisée en ce qu'**il est prévu un résonateur de micro-ondes (15) en connexion avec le dispositif de cardage.

13. Machine de préparation de filature selon la revendication 11 ou 12, **caractérisée en ce qu'**il est prévu un résonateur de micro-ondes (15) dans le dispositif d'étirage (9, 10, 11).

14. Machine de préparation de filature selon l'une des revendications 11 à 13, **caractérisée en ce qu'**un résonateur de micro-ondes (15) est prévu derrière le dispositif d'étirage (9, 10, 11).

15. Machine de préparation de filature selon l'une des revendications 11 à 13, **caractérisée en ce qu'**elle comporte un résonateur de micro-ondes (18) pour mesurer l'humidité de la matière de départ (2).
